# EUROPEAN PATENT APPLICATION

(11) **EP 2 592 777 A1**
(43) Date of publication of application: **15.05.2013**
(21) Application number: 12191550.8
(22) Date of filing: 07.11.2012
(51) Int. Cl.: H04L 1/18, H04B 7/02

(54) **Method for distributing data units of a data flow between two outdoor units**

(30) Priority: 09.11.2011 IT MI20112031
(71) Applicant: Linkra S.r.l., 20863 Concorezzo (IT)
(72) Inventor: Granello, Guido, 20863 Concorezzo (MB) (IT); Di Bacco, Antonio, 20863 Concorezzo (MB) (IT); Beretta, Tiziano, 20863 Concorezzo (MB) (IT)
(74) Representative: Colombo, Stefano Paolo

(57) **Abstract**

Method for distributing data units of a data flow between a first and a second outdoor unit in a transceiving system of a radio communication network. The first and the second outdoor unit are configured to support, respectively, a first and a second radio channel towards a further transceiving system. The method comprises the following steps, at the first outdoor unit: receiving a data unit; when the first and second radio channel are available, dividing the data unit into first data blocks of a first length, alternated with second data blocks of a second length, wherein the first and second lengths are correlated, respectively, to a transmission capacity of the first radio channel and to a transmission capacity of the second radio channel; and managing the first data blocks in the first outdoor unit and forwarding the second data blocks to the second outdoor unit.

## Description

The present invention relates to the field of radio communication networks. In particular, the present invention relates to a method for distributing data units of a data flow between two outdoor units in a transceiving system of a radio communication network.

A radio communication network typically comprises a plurality of nodes each comprising one or more transceiving systems which perform the connection between the nodes via radio links. In the continuation of the present description, the expression "radio link" is understood as meaning a point-to-point radiofrequency connection between two transceiving systems belonging to two nodes of a radio communication network. For example, in a GSM radio access network, the base stations (or BTS, "Base Transceiver Stations") are typically connected together or to the respective controllers (or BSC, "Base Station Controllers") by means of dedicated radio links.

In conventional solutions, the radio links of the GSM access network transport voice and data traffic in digital format organized in TDM ("Time Division Multiplexing") frames. In the latest generation access networks, for example the LTE ("Long Term Evolution") access networks, the traffic is instead transported in the form of packets, in particular Ethernet packets. With this solution it is in fact possible to optimize the network which is required to support a large variety of services with a high transmission capacity (e.g. access to the Internet, video-on-demand, IPTV, etc.).

A radio transceiving system in a so-called "full outdoor" configuration typically comprises one or two outdoor units installed externally and connected to one or two antennas by means of waveguides. The outdoor units of this system typically comprise:
- a data interface adapted to interface the outdoor unit with the rest of the communication network and receive data traffic, typically in the form of a baseband digital signal, or a bit sequence (for example, Ethernet frames);
- a modem (modulator/demodulator) adapted to modulate a carrier at an intermediate frequency with the baseband signal received. A typical digital modulation format used is digital quadrature amplitude modulation or QAM. During reception, the demodulator demodulates the intermediate frequency signal and recovers the baseband signal;
- a radiofrequency transmitter/receiver (or transceiver). During transmission, the radiofrequency transmitter is able to convert the intermediate frequency signal into a radio signal, namely into a signal with a carrier frequency in the microwave range (3 GHz - 300 GHz), and amplify this signal for transmission thereof in the air, by means of the antenna. During reception, the radiofrequency receiver converts a radio signal captured by the antenna into an intermediate-frequency signal which is sent to the demodulator; and
- devices for radiofrequency filtering and coupling with the antenna. The radio signals being transmitted and received may be transferred to and from the antenna via microwave filters which ensure filtering thereof.

It is known to increase the transmission capacity of a radio link between two network nodes using two radio signals (or two "radio channels") in parallel between two transceiving systems belonging to the two nodes to be connected. In particular, it is known to use two radio signals with the same carrier frequency, but different polarization (in a so-called "co-channel dual polarization" or CCDP configuration). In this case, two radio signals with orthogonal polarizations are transmitted, namely a first radio signal with vertical polarization (indicated below as "vertical radio signal") and a second radio signal with horizontal polarization (indicated below as "horizontal radio signal"). Despite the fact that their polarizations are orthogonal, the two radio signals may interfere, for example owing to the linear distortions introduced by the transmission means (which may be due, for example, to adverse atmospheric propagation conditions).

In order to manage the two radio signals described above, a full outdoor transceiving system is typically provided with two outdoor units, one which is configured to transmit and receive the vertical radio signal and the other to transmit and receive the horizontal radio signal.

In order to be able to exploit fully the entire capacity of the system, it is known to divide up the voice and/or data traffic (for example in the form of Ethernet traffic) so that it is transmitted by either one of the outdoor units on the respective radio channel. In order to minimize the transmission delay, this division is performed on the basis of the single packets of the said traffic. Each packet is routed to one of the outdoor units which transmits the said packet on the corresponding radio channel.

The Applicant has noted that this solution has a number of drawbacks. In particular, the abovementioned division into single packets results in the packets being subject to possible different delays on the two radio channels and consequently the packets may reach the transceiving system of the destination node in an incorrect order. In fact, the Ethernet packets typically have a variable length (the payload of an Ethernet packet may in fact comprise from 46 bytes to 9600 bytes). It may therefore happen that a first packet, the payload of which is for example 1500 bytes long, transmitted by the first outdoor unit, arrives at a later time than packets which follow it in terms of time sequence, but are shorter, transmitted by the second outdoor unit. Moreover, the transmission capacity (in bit/s) of the two radio channels may be different, for example depending on the type of modulation used, and this introduces a further cause of variability of the delay. In principle this situation may be avoided by numbering the packets and introducing buffers which temporarily store the packets in the outdoor units so as to allow reordering of the packets, i.e. in such a way that transmission thereof occurs in the correct time sequence. However, the Applicant has noted this solution may be very complex and could result in further delays due to the temporary storage of the packets.

Therefore, the object of the present invention is to provide a method for distributing data units of a data flow between two outdoor units of a radio transceiving system which solves the abovementioned problem. In particular, the object of the present invention is to provide a method for distributing these data units to the outdoor units which allows balancing of the traffic between the two radio channels so as to minimize the delay with which the packets are transmitted and so as to be able to reorder the packets in a simple manner.

According to a first aspect of the invention, a method for distributing data units of a data flow between a first outdoor unit and a second outdoor unit of a radio transceiving system of a radio communication network is provided, wherein the first outdoor unit is configured to support a first radio channel towards a further radio transceiving system of the network and the second outdoor unit is configured to support a second radio channel towards the further radio transceiving system, the method comprising the following steps, at the first outdoor unit:
a) receiving a data unit of the data flow;
b) when the first radio channel and the second radio channel are available, dividing the data unit into a number of first data blocks of a first length, m, alternated with a number of second data blocks of a second length, n, wherein the first length is correlated to a first transmission capacity of the first radio channel and wherein the second length is correlated to a second transmission capacity of the second radio channel; and
c) managing the first data blocks in the first outdoor unit and forwarding the second data blocks to the second outdoor unit.

Preferably, the step a) further comprises assigning to the received data unit a sequence number indicative of an order of the data unit within the data flow.

Preferably, the step b) further comprises associating the sequence number with the first data blocks and with the second data blocks.

Preferably, in the step c), the forwarding comprises sending the second data blocks to the second outdoor unit via a serial communication channel between the first outdoor unit and the second outdoor unit.

Preferably, the step b) further comprises reading the first length and the second length from a traffic balancing table as a function of a first index indicative of the first transmission capacity and of a second index indicative of the second transmission capacity.

Preferably, the method further comprises continuously receiving from the second outdoor unit the second index indicative of the second transmission capacity via the serial communication channel.

According to a second aspect of the invention, a transmission request managing device for an outdoor unit of a radio transceiving system of a radio communication network is provided, the outdoor unit being configured to support a first radio channel towards a further radio transceiving system of the network, the radio transceiving system comprising a further outdoor unit configured to support a second radio channel towards the further radio transceiving system, the device being configured to divide, when the first radio channel and the second radio channel are available, a data unit of a data flow received at the outdoor unit into a number of first data blocks of a first length, m, alternated with a number of second data blocks of a second length, n, wherein the first length is correlated to a first transmission capacity of the first radio channel and wherein the second length is correlated to a second transmission capacity of the second radio channel.

According to a third aspect of the invention, an outdoor unit for a radio transceiving system of a radio communication network is provided, the outdoor unit being configured to support a first radio channel towards a further radio transceiving system of the network, the radio transceiving system comprising a further outdoor unit configured to support a second radio channel towards the further radio transceiving system, the outdoor unit being configured to:
- receive a data flow divided into data units;
- when the first radio channel and the second radio channel are available, divide a data unit of the data flow into a number of first data blocks of a first length, m, alternated with a number of second data blocks of a second length, n, wherein the first length is correlated to a transmission capacity of the first radio channel and wherein the second length is correlated to a transmission capacity of the second radio channel; and
- manage the first data blocks and forward the second data blocks to the further outdoor unit.

According to a fourth aspect of the invention, a radio transceiving system for a radio communication network is provided, the radio transceiving system comprising a first outdoor unit as described above, and a second outdoor unit.

The present invention will emerge more clearly from the following detailed description, provided by way of a non-limiting example, to be read with reference to the accompanying drawings in which:
- Figure 1 is a block diagram of a radio transceiving system, according to an embodiment of the present invention;
- Figure 2 is a block diagram, in greater detail, of the transceivers included in the system according to Figure 1;
- Figures 3a and 3b are, respectively, a more detailed block diagram of a first and a second traffic balancing module each included in one of the transceivers according to Figure 2;
- Figures 4a and 4b show, respectively, a modulation index association table and a traffic balancing table;
- Figure 5 shows a flow diagram illustrating the method according to an embodiment of the present invention; and
- Figures 6a, 6b, 6c and 6d show, respectively, the format of a packet, a frame header, a radio interface frame and a serial interface data unit, according to embodiments of the present invention.

### Block diagram of the transceiving system

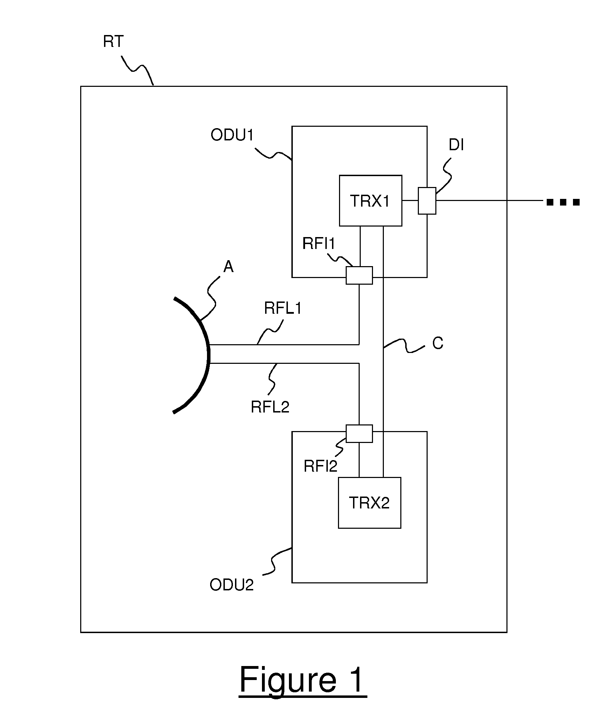

Figure 1 shows a block diagram of a transceiving system RT for a node of a radio communication network according to an embodiment of the present invention.

The transceiving system RT shown in Figure 1 has a full outdoor configuration and comprises an antenna A, a first outdoor unit ODU1 and a second outdoor unit ODU2.

The first outdoor unit ODU1 comprises a radio interface RFI1, a baseband transceiver TRX1 and a data interface D1 via which a flow of traffic data, for example a flow of Ethernet traffic, passes from and towards the network node. In the continuation of the present description, the first outdoor unit ODU1 will also be referred to as "master" unit. Similarly, the second outdoor unit ODU2 comprises a radio interface RFI2 and a baseband transceiver TRX2. In the continuation of the present description, the second outdoor unit ODU2 will also be referred to as "slave" unit. Both the first outdoor unit ODU1 and the second outdoor unit ODU2 comprise further modules and devices, not shown in the Figure, which will not be described below since they are not relevant for the purposes of the present invention.

The first outdoor unit ODU, and in particular its radio interface RFI1, is connected to the antenna A by means of a first connection RFL1, while the second outdoor unit ODU2, and in particular its radio interface RFI2, is connected to the antenna A by means of a second connection RFL2. Preferably, the first connection RFL1 and the second connection RFL2 are formed with waveguides.

Moreover, the transceiver TRX1 of the first outdoor unit ODU1 and the transceiver TRX2 of the second outdoor unit ODU2 are connected together by means of a cable C. The first outdoor unit ODU1 and the second outdoor unit ODU2 are typically located at a mutual distance of between 0.3 m and 2 m. The length of the cable C is preferably between 0.5 m and 2 m. Preferably, the cable C is a serial cable which is designed to support the transmission of a serial channel CSC, as will be described in greater detail below. According to a preferred embodiment of the present invention, the cable C is a copper twisted pair cable comprising a number of twisted pairs higher than 2. In particular, the cable C is an Ethernet cable of category CAT 6 or CAT 6a.

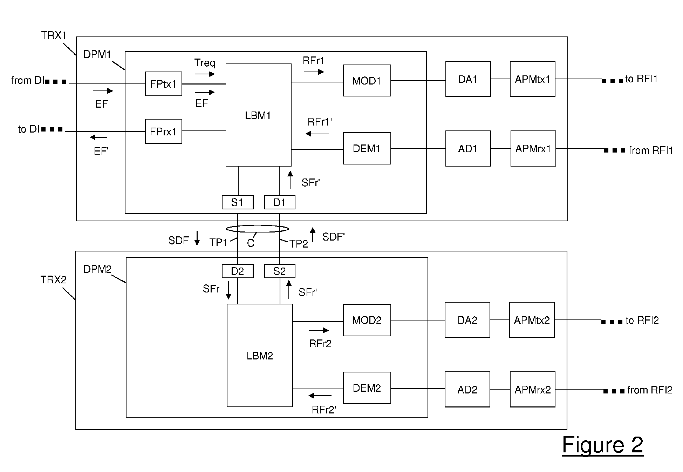

Figure 2 shows a block diagram, in greater detail, of the two transceivers TRX1, TRX2.

The transceiver TRX1 comprises a digital processing module DPM1 connected to a digital-analog converter DA1, in turn connected to a transmitting analog processing module APMtx1, and to an analog-digital converter AD1, in turn connected to a receiving analog processing module APMrx1.

In turn, the digital processing module DPM1 comprises a transmitting frame processing module FPtx1 and a receiving frame processing module FPrx1 connected to a traffic balancing block LBM1 which is also connected to a modulator MOD1, a demodulator DEM1, a serializer S1 and a deserializer D1. Preferably, the digital processing module DPM1 is an integrated component of the FPGA ("Field Programmable Gate Array") type. Moreover, the connections between the components of the digital processing module DPM1 may be connected parallel, namely transmission of digital data between the components of the digital processing module DPM1 may occur in parallel mode.

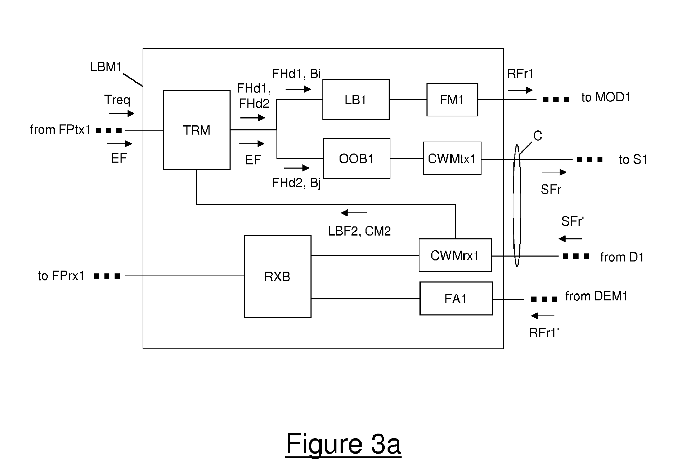

Figure 3a shows a block diagram, in greater detail, of the traffic balancing block LBM1 of the transceiver TRX1. This block LBM1 comprises a module for managing the transmission requests, TRM1, which is connected to a local buffer LB1 and to a serial channel buffer OOB1: the local buffer LB1 is connected to a frame management module, FM1, while the serial channel buffer OOB1 is connected to a serial channel transmission module CWMtx1. The traffic balancing block LBM1 furthermore comprises a serial channel reception module CWMrx1 and a frame aligner FA1 connected to a reception buffer RXB.

The local buffer LB1 and the serial channel buffer OOB1 are managed as cyclical buffers.

The transceiver TRX1 may comprise other devices, not shown in Figure 2, which will not be described below since they are not relevant for the purposes of the present invention.

The transceiver TRX2 comprises a digital processing module DPM2 connected to a digital-analog converter DA2, in turn connected to a transmitting analog processing module APMtx2, and to an analog-digital converter AD2, in turn connected to a receiving analog processing module APMrx2. The digital processing module DPM2 of the transceiver TRX2 comprises a traffic balancing block LBM2 connected to a modulator MOD2, a demodulator DEM2, a serializer S2 and a deserializer D2. Preferably, the digital processing module DPM2 is also an integrated component of the FPGA ("Field Programmable Gate Array") type.

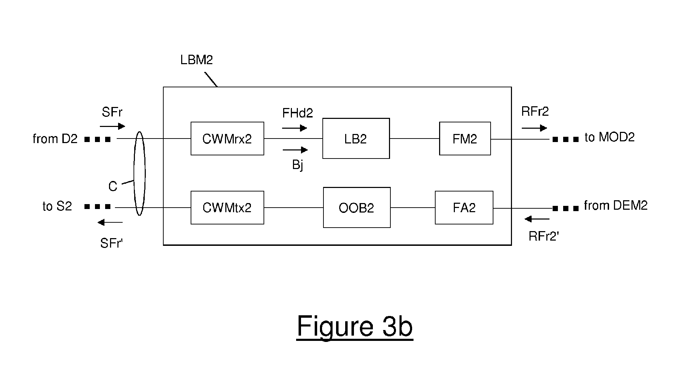

Figure 3b shows a block diagram, in greater detail, of the traffic balancing block LBM2 of the transceiver TRX2. Said block comprises a serial channel reception module CWMrx2, a local buffer LB2 and a frame management module FM2, which are connected in cascade, and a frame aligner FA2, a serial channel buffer OOB2, and a serial channel transmission module CWMtx2, which are in turn connected in cascade.

The local buffer LB2 and the serial channel buffer OOB2 are also managed as cyclical buffers.

The serializer S1 of the transceiver TRX1 is preferably connected to the deserializer D2 of the transceiver TRX2 and the deserializer D1 of the transceiver TRX1 is preferably connected to the serializer S2 of the transceiver TRX2. The connection between the serializers and the deserializers is performed by means of a serial communication channel CSC implemented by means of the cable C. If the cable C comprises several twisted pairs, the serializer S1 is preferably connected to the deserializer D2 by means of a first twisted pair TP1 and the deserializer D1 is preferably connected to the serializer S2 by means of a second twisted pair TP2, as shown in Figure 2.

The first outdoor unit ODU1 is preferably configured to support a first radio channel CH1 between the radio transmission system RT and a further transceiving system of the communication network. For example, the first outdoor unit ODU1 may be configured to transmit and receive, on the radio link, via the antenna A, a radio signal with vertical polarization V(t). The second outdoor unit ODU2 is configured to support a second radio channel CH2 between the radio transmission system RT and the further transceiving system of the communication network. For example, the second outdoor unit ODU2 may be configured to transmit and receive, on the radio link, via the antenna A, a radio signal with horizontal polarization V(t).

Moreover, both the outdoor units ODU1 and ODU2 are configured to transmit and receive radio signals which are formatted in a digital modulation format. Preferably, this modulation format is a QAM modulation format, for example 4-QAM, 16-QAM, 128-QAM, 256-QAM, 1024-QAM, etc. The modulation format used on the first radio channel CH1 may be the same as or different from the modulation format used on the second radio channel CH2.

The operating principle of the transceiving system RT will be described below.

### Operation of the master unit ODU1 during transmission

In the operating condition, the master unit ODU1 receives via the data interface D1 (for example, from a further transceiving system of the communication network or from a directly connected user appliance) a flow of digital data which is preferably divided into data units for transmission on the radio link. According to a preferred embodiment of the present invention, the data units are Ethernet packets. In the continuation of the present description, purely by way of a non-limiting example, reference will be made to a digital data flow divided into Ethernet packets.

Each packet EF of the flow of digital data received at the master unit ODU1 via the data interface D1 is forwarded to the digital processing module DPM1 and in particular to the transmitting frame processing module FPtx1 which determines the length L of the packet EF, counting the number of bytes included in the packet EF. Then, the transmitting frame processing module FPtx1 forwards to the traffic balancing block LBM1, and in particular to the transmission request management module TRM, the packet EF and the length information L, activating simultaneously a transmission request signal Treq.

The transmission request management module TRM preferably operates on the basis of the following information:
- a first filling index LBF1, indicative of a filling state of the local buffer LB1 (empty/not empty) of the first transceiver TRX1;
- a second filling index LBF2, indicative of a filling state of the local buffer LB2 (empty/not empty) of the second transceiver TRX2. This information is transferred with continuity from the slave unit ODU2 to the master unit ODU1 via the serial communication channel CSC, as will be described in greater detail below;
- a first modulation index CM1, indicative of the availability/non-availability of the first radio channel CH1 and the modulation format currently used by the modulator MOD1 of the first transceiver TRX1. In the continuation of the present description and in the claims, the expression "available radio channel" is understood as meaning a radio channel which may be used for the transmission and/or reception of data;
- a second modulation index CM2, indicative of the availability/non-availability of the second radio channel CH2 and the modulation format currently used by the modulator MOD2 of the second transceiver TRX2. This information is also transferred with continuity from the slave unit ODU2 to the master unit ODU1 via the serial communication channel CSC, as will be described in greater detail below.

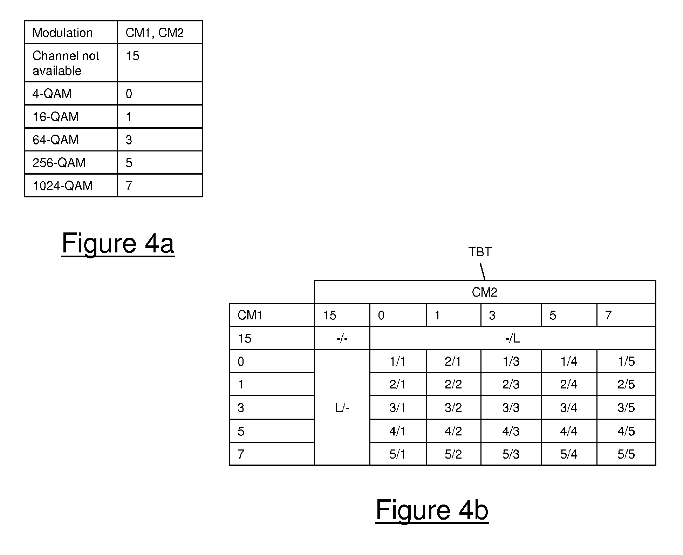

Preferably, the first and the second modulation index CM1, CM2 are integer numbers which codify the modulation format used by the modulator MOD1 and by the modulator MOD2, respectively. These indices may, for example, assume the values indicated in a predetermined modulation index association table stored inside the transmission request management module TRM. An example of an index association table is shown in Figure 4a. According to this table, if for example the modulator MOD1 uses the modulation format 4-QAM, 16-QAM, 64-QAM, 256-QAM, 1024-QAM on the first radio channel CH1, the first modulation index CM1 is respectively 0, 1, 3, 5 and 7. If, instead, the first radio channel CH1 is momentarily not available (for example owing to adverse atmospheric conditions or because of a fault) the first modulation index CM1 is 15.

The transmission request management module TRM preferably divides the packet EF into a number of data blocks comprising one or more bytes each and distributes alternately these blocks, one by one, between the local buffer LB1 and the serial channel buffer OOB1 so that they are transmitted on the first radio channel CH1 and on the second radio channel CH2, respectively, as will be described in greater detail below. In particular, the transmission request management module TRM preferably divides the packet EF into M data blocks Bi (to be sent to the local buffer LB1), each comprising m bytes, alternated with N data blocks Bj (to be sent to the serial channel buffer OOB1), each comprising n bytes.

The number m of bytes included in the blocks Bi and the number n of bytes included in the blocks Bj may be predetermined by the transmission request management module TRM on the basis of possible values of the modulation indices CM1 and CM2 (as for example shown in the table of Figure 4a). In particular, the numbers m, n are determined so that their ratio m/n is correlated to the ratio between the transmission capacities of the first radio channel CH1 and the second radio channel CH2, which depend on the availability of the radio channels CH1 and CH2 and on the modulation format used. The numbers m and n of bytes may then be stored in the transmission request management module TRM in a traffic balancing table TBT showing the ratio m/n as a function of the two modulation indices CM1 and CM2. An example of such a table is shown in Figure 4b. It should be noted that, in the case where one of the two radio channels CH1 or CH2 is not available (and in this case the respective modulation index CM1, CM2 is 15), according to this table all the bytes of EF are forwarded on the other operative channel. In particular, if for example the second radio channel CH2 is not available (CM2=15), all the L bytes of the packet EF are forwarded to the local buffer LB1. On the other hand, if the first radio channel CH1 is not available (CM1=15), all the L bytes of the packet EF are forwarded to the serial channel buffer OOB1. If both the radio channels CH1, CH2 are not available (CM1=CM2=15), no byte of the packet EF is sent to the local buffer LB1 or to the serial channel buffer OOB1 and in this situation the packet EF may therefore not be transmitted. If both the channels CH1 and CH2 are available, the blocks Bi and Bj are sent alternately to the buffer LB1 and OOB1 until the L bytes of the packet EF are used up: if Mb is the total number of bytes of the packet EF1 to be sent to the local buffer LB1 for transmission on the first radio channel CH1 and Nb is the total number of bytes of the packet EF2 to be sent to the serial channel buffer OOB1 for transmission on the second radio channel CH2, Mb+Nb=L. Considering for example both the radio channels CH1, CH2 available, the first modulator MOD1 operating with 16-QAM modulation while the second modulator MOD2 with 4-QAM modulation (namely, the first radio channel CH1 has a transmission capacity greater than that of the second radio channel CH2), from the traffic balancing table shown in Figure 4b it can be seen that m=2 and n=1, i.e. the blocks Bi, Bj comprise 2 bytes and 1 byte, respectively. If, on the other hand, for example, both the radio channels CH1, Ch2 are available and the two modulators MOD1, MOD2 both operate with 1024-QAM modulation (namely the two radio channels CH1, CH2 have substantially the same transmission capacity), m=n=5, both the blocks Bi and the blocks Bj comprise 5 bytes.

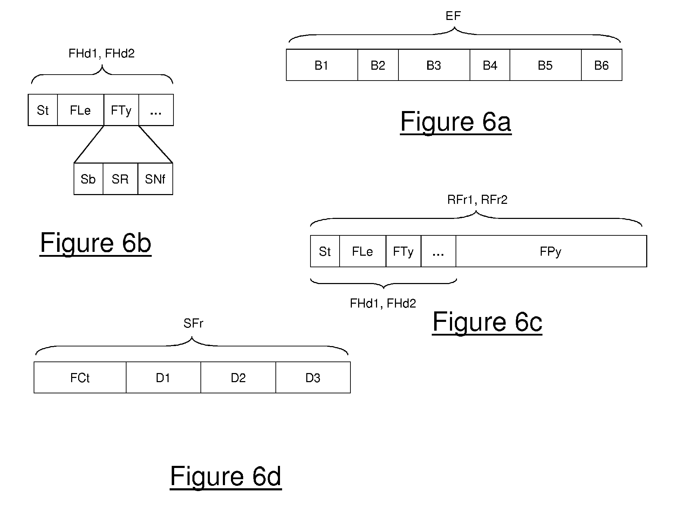

Figure 6a shows for example the case where a packet EF is divided into six blocks B1, ..., B6, in particular three blocks (namely B1, B3, B5) of length m bytes, alternated with three blocks (namely B2, B4, B6) of length n bytes.

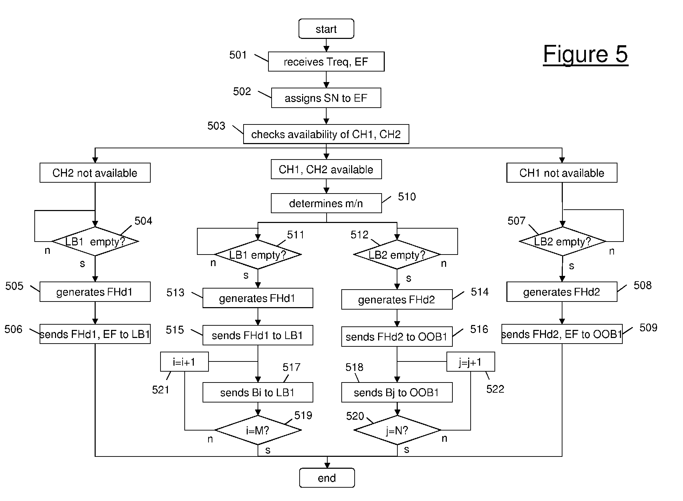

Operation of the transmission request management module TRM is now described in greater detail with reference to the flow diagram shown in Figure 5. During a step 501, the module TRM receives the transmission request Treq and the packet EF and stores the packet EF with its length L. Then, during a step 502, the transmission request module TRM preferably associates with the packet RF a sequence number SN which indicates the order number of the packet EF within the digital data flow to be transmitted on the radio channels CH1, CH2. Therefore, whenever the transmission request management module TRM performs the step 502, the value of the sequence number SN is increased by a fixed number, for example 1. Therefore, the sequence number SN associated with each packet EF received from the transmission request management module TRM is equal to the sequence number of the packet received immediately before, incremented by a fixed number, for example 1.

During a step 503, the transmission request management module TRM preferably checks the availability of the first radio channel CH1 and the second radio channel CH2. For this purpose, the transmission request management module TRM preferably checks the first modulation index CM1 and the second modulation index CM2. If the first modulation index CM1 is different from 15, the transmission request management module TRM preferably determines that first radio channel CH1 is available for transmission of the packet RF. If, on the other hand, the first modulation index CM1 is equal to 15, the transmission request management module TRM preferably determines that first radio channel CH1 is not available for transmission of the packet EF. In an entirely similar manner, the transmission request management module TRM checks the second modulation index CM2 and determines whether the second radio channel CH2 is available or not for transmission of the packet EF.

Once the availability of the first radio channel CH1 and/or the second radio channel CH2 has been verified, the transmission request management module TRM preferably generates a first frame header FHd1 to be sent to the local buffer LB1 and/or second frame header FHd2 to be sent to the serial channel buffer OOB1. As shown in Figure 6b, each frame header FHd1, FHd2 comprises the following fields:
- a frame start field St, consisting of a fixed sequence of frame start bits; such a field comprises preferably a sequence of 2 bits, for example the sequence "10";
- a frame length field Fle comprising a bit string, for example 14-bit string, indicative of the number of bytes Mb, Nb of the packet EF loaded overall into the local buffer LB1 and into the serial channel buffer OOB1, respectively; if, for example, all the L bytes of the packet EF are loaded into the local buffer LB1, the field FLe of the associated frame header FHd1 comprises a number equal to L;
- a frame type field FTy comprising in turn the following sub-fields:
- a start sub-field Sb preferably comprising one bit, in which this bit is set to 0 in the case where all the bytes of the packet EF are loaded into the respective buffer LB1, OOB1 or in the case where the first byte of the packet EF is loaded into the respective buffer LB1, OOB1; the bit is set to 1 in the other cases;
- a distribution ratio sub-field SR comprising a bit string, for example 3-bit string, indicative of the number of bytes m, n included in the blocks Bi, Bj sent alternately to the respective buffer LB1, OOB1; if all the bytes of the packet EF are loaded into the respective buffer LB1, OOB1, the sub-field SR preferably comprises a bit string indicative of a predetermined number, for example equal to 7;
- a sequence number sub-field SNf comprising a bit string, for example 4-bit string, indicative of the sequence number SN associated with the packet EF.

The first frame header FHd1 and the second frame header FHd2 may comprise other fields not shown in Figure 6b, since not relevant for the purposes of the present invention.

In particular, if, during the step 503, the transmission request management module TRM determines that only the first radio channel CH1 is available for transmission of the packet EF (owing, for example, to a fault which involves the second radio channel CH2), the transmission request management module TRM, during a step 504, preferably controls the first filling index LBF1 and on the basis thereof determines whether the local buffer LB1 is empty or not. If the local buffer LB1 is empty, the transmission request management module TRM preferably generates a first frame header FHd1 (step 505) in which:
- the frame length field FLe comprises the overall number L of bytes in the packet EF;
- in the frame type field FTy:
- the bit of the start sub-field Sb is set to 0 (in fact the entire packet EF is sent to the local buffer LB1);
- in the distribution ratio sub-field SR, the number m is set to a predetermined value, for example 7, indicative of the fact that all the bytes of the packet EF are sent to the local buffer LB1;
- the sequence number sub-field SNf comprises the sequence number SN of the packet EF.

Then, during a step 506, the transmission request management module TRM preferably sends to the local buffer LB1 the frame header FHd1 and the packet EF.

If, during the step 503, the transmission request management module TRM determines that only the second radio channel CH2 is available for transmission of the packet EF (owing, for example, to a fault which involves the first radio channel CH1), the transmission request management module TRM, during a step 507, preferably controls the second filling index LBF2 and on the basis thereof determines whether the local buffer LB2 of the second transceiver TRX2 is empty or not. If the local buffer LB2 is empty, the transmission request management module TRM preferably sends to the serial channel buffer OOB1 a frame header FHd2 (step 508) in which:
- the frame length field FLe comprises the overall number L of bytes in the packet EF;
- in the frame type field FTy:
   - the bit of the start sub-field Sb is set to 0 (in fact the entire packet EF is sent to the serial channel buffer OOB1);
   - in the distribution ratio sub-field SR, the number n is set to a predetermined value, for example 7, indicative of the fact that all the bytes of the packet EF are sent to the serial channel buffer OOB1;
   - the sequence number sub-field SNf comprises the sequence number SN of the packet EF.

Then, during a step 509, the transmission request management module TRM preferably sends to the serial channel buffer OOB1 the frame header FHd2 and the packet EF.

If, during the step 503, the transmission request management module TRM determines that both the radio channels CH1, CH2 are available for transmission of the packet EF, the transmission request management module TRM, during a step 510, preferably determines the ratio m/n on the basis of the first modulation index CM1 and the second modulation index CM2, for example reading a traffic balancing table TBT such as that shown in Figure 4b. Then, the transmission request management module TRM, during a step 511, preferably checks the first filling index LBF1 and on the basis thereof determines whether the local buffer LB1 is empty or not. Substantially at the same time, the transmission request management module TRM, during a step 512, preferably checks the second filling index LBF2 and on the basis thereof determines whether the local buffer LB2 is empty or not.

When the first filling index LBF1 indicates that the local buffer LB1 of the master unit ODU1 is empty, the transmission request management module TRM preferably generates a first frame header FHd1 (step 513) during which:
- the frame length field FLe comprises the overall number Mb of bytes of the packet EF to be sent to the local buffer LB1;
- in the frame type field FTy:
   - the bit of the start sub-field Sb is set to 0;
   - the distribution ratio sub-field SR comprises the number m of bytes of the blocks Bi;
   - the sequence number sub-field SNf comprises the sequence number SN of the packet EF.

When the second filling index LBF2 indicates that the local buffer LB2 of the master unit ODU2 is empty, the transmission request management module TRM preferably sends a second frame header FHd2 to the serial channel buffer OOB1 (step 514) in which:
- the frame length field FLe comprises the overall number Nb of bytes of the packet EF to be sent to the serial channel buffer OOB1;
- in the frame type field FTy:
   - the bit of the start sub-field Sb is set to 1;
   - the distribution ratio sub-field SR comprises the number n of bytes of the blocks Bj;
   - the sequence number sub-field SNf comprises the sequence number SN of the packet EF.

Then, the transmission request management module TRM during the steps 515 and 516 preferably sends the first and second frame header FHd1, FHd2, to the local buffer LB1 and to the serial channel buffer OOB1, respectively. Moreover, during the steps 517 and 518, it sends, alternately, a block Bi of m bytes to the local buffer LB1 and a block Bj of n bytes to the serial channel buffer OOB1. The steps 517 and 518 are repeated alternately until the transmission request management module TRM has sent a total number M of blocks Bi to the local buffer LB1 and a total number N of blocks Bj to the serial channel buffer OOB1, as shown in the flow diagram by means of the steps 519, 521 and the steps 520, 522, respectively. At the end of these operations, the local buffer LB1 contains the frame header FHd1 described above and a number Mb of bytes of the packet EF, while the serial channel buffer OOB1 contains the frame header FHd2 described above and a number Nb of bytes in the packet EF.

The data contained in the local buffer LB1 is transferred to the frame management module FM1 which provides a radio interface frame RFr1 (the format of which is shown in Figures 6c) to the first modulator MOD1, comprising the frame header FHd1 described above and a payload FPy in turn comprising the Mb bytes of the packets EF contained in the local buffer LB1. The first modulator MOD1 then applies the digital modulation format (e.g. 4-QAM, 16-QAM) currently used. The data is then sent to the digital-analog converter DA1 which performs digital-analog conversion thereof and generates a baseband analog signal. Then the analog signal generated is transmitted to the transmitting analog processing module APMtx1 which applies this signal to a suitable radio carrier for transmission on the first radio channel CH1 via the radio interface RFI1.

The data contained in the serial channel buffer OOB1 is transferred to the serial channel transmission module CWMtx1 for transfer thereof to the slave unit ODU2.

The serial channel transmission module CWMtx1 inserts the data received inside one or more serial interface data units SFr each having the format shown in Figure 6d. In particular, each serial interface data unit SFr comprises:
- a control field FCt, for example with 4 bits, comprising the first filling index LBF1 (for example equal to 0 if the local buffer LB1 is empty, otherwise equal to 1) and the first modulation index CM1;
- a number of data fields D1, D2, D3 each comprising one or more bytes of the data received (namely, of the frame header FHd2 and the blocks Bj) from the serial channel transmission module CWMtx1. The number of data fields D1, D2, D3 is preferably equal to 3. Moreover, each of the data fields D1, D2, D3 has preferably a length of 1 byte.

Each serial interface data unit SFr therefore has preferably a length of 4 bytes, 3 bytes of which are reserved for transporting the frame header FHd2 and the blocks Bj. For example, if the data received from the serial channel buffer OOB1 has an overall length of 120 bytes, the serial channel transmission module CWtx1 will generate 40 consecutive serial interface data units SFr.

The serial interface data units DFr generated by the serial channel transmission module CWMtx1 is then sent to the serializer St. The serializer S1 then preferably serializes the bits of each serial interface data unit SFr and transmits them serially along the cable C (in particular along the twisted pair TP1) towards the deserializer D2 included in the second transceiver TRX2. In order to ensure correct recognition of the serial interface data units SFr at the deserializer D2, the serializer S1 periodically inserts alignment words into the serial interface data unit sequence SFr. Each alignment word preferably comprises a predefined sequence of bits. Preferably, the alignment word comprises an integer number of bytes greater than or equal to 1, for example 2 bytes. For example, the serializer S1 may transmit an alignment word every 31250 serial data interface units SFr. The serial interface data units SFr and the alignment words form a data flow SDF which is transmitted serially along the twisted pair TP1.

The transmission speed of the flow SDF on the twisted pair may be equal to about 1 Gb/s.

### Operation of the slave unit ODU2 during transmission

In the slave unit ODU2 the deserializer D2 preferably receives the data flow SDF from the serializer S1 of the master unit ODU1, deserializes it and reconstructs the serial interface data units SFr using the alignment words inserted in the data flow SDF.

The serial interface data units SFr are transmitted to the traffic balancing block LBM2 of the second transceiver TRX2 and in particular to the serial channel reception module CWMrx2. This module preferably extracts from the serial interface data units SFR received the frame header FHd2 and the blocks Bj and sends them to the local buffer LB2. In turn, the local buffer LB2 sends the data to the frame management module FM2 which generates a radio interface frame RFr2 substantially similar to the radio interface frame RFr1 described above. The radio interface frame RFr2 is then sent to the second modulator MOD2 and in cascade to the digital-analog converter DA2 and to the transmitting digital processing module APMtx2 for transmission of the data on the second radio channel CH2 via the radio interface RFI2. The operations of these modules are similar to those of the modules MOD1, DA1 and APMtx1 already described above and a description thereof will therefore not be repeated.

Advantageously, unlike the known balancing methods in which distribution of the traffic between the radio channels is performed on a packet-by-packet basis, according to the method described above, distribution is performed on the basis of the single bytes of blocks of a few bytes of the packets to be transmitted. A radio channel may therefore transmit a greater or smaller number of bytes of the same packet depending on the modulation format currently supported and therefore depending on its actual transmission capacity. If the first radio channel supports a modulation format with a higher number of levels than the second radio channel (for example, the first radio channel supports the 256-QAM format, while the second radio channel supports the 16-QAM format), then on the first radio channel, which has a greater transmission capacity, a greater number of bytes of the packet EF will be transmitted than on the second radio channel. Advantageously, therefore, the bytes of the same packet transmitted on the two different radio channels reach the destination substantially at the same time. This allows the traffic to be distributed in a more uniform manner (namely the operating efficiency of the two radio channels to be maximized) and delays of the packets to be minimized.

Moreover, advantageously, the connection between the first outdoor unit ODU1 and the second outdoor unit ODU2 for the exchange of the data flows for traffic balancing is performed in a simple and low-cost manner. In fact, since the serializers of the receivers present in the outdoor units perform serialization of the processed data, in parallel, in the digital processing modules of the transceivers TRX1, TRX2, the connection between the two outdoor units ODU1, ODU2 is a serial connection which may be advantageously performed using a standard Ethernet cable.

### Operation during reception

As regards operation of the transceiving system RT during reception, it is assumed that a further transceiving system of the communication network connected to the transceiving system RT by means of the two radio channels CH1, CH2 transmits a flow of digital data comprising Ethernet packets EF' implementing, during transmission, the method for distributing these packets between the radio channels CH1, CH2 described above.

The master unit ODU1 of the transceiving system RT receives, via its radio interface RFI1, a radio frequency analog signal which is sent to the receiving analog processing module APMrx1. Said module extracts a first baseband analog signal and sends it to the analog-digital converter AD1 which performs an analog-digital conversion thereof. The digital data obtained is sent to the demodulator DEM1 which extracts a first baseband digital signal. The demodulator DEM1 sends this signal to the traffic balancing block LBM1 and in particular to the frame aligner FA1. The frame aligner FA1 extracts from the signal the radio interface frames RFr1' (which have the format shown in Figure 6c), recognizing the predefined bit sequences of the frame start field St at the start of each frame. The frames RFr1' are then sent to the reception buffer RXB.

In a similar manner, the slave unit ODU2 receives, via the second radio interface RFI2, a second radio frequency analog signal which is sent to the receiving analog processing module APMrx2. Said module extracts a baseband analog signal and sends it to the analog-digital converter AD2 which performs an analog-digital conversion thereof. The digital data obtained is sent to the demodulator DEM2 which extracts a second baseband digital signal. The demodulator DEM2 sends this signal to the digital processing module LBM2 and in particular to the frame aligner FA2. The frame aligner FA2 extracts from the signal the radio interface frames RFr2' (which also have the format shown in Figure 6c), recognizing the predefined bit sequences of the frame start field St at the start of each frame.

The radio interface frames RFr2' are sent to the serial channel buffer OOB2 of the digital processing module DPM2 and then transferred to the serial channel transmission module CWMtx2. The serial channel transmission module CWMtx2 inserts the bytes relating to each frame RFr2' inside one or more serial interface data units SFr' each having the format shown in Figure 6d. In particular, each serial interface data unit SFr' comprises:
- a control field FCt, for example with 4 bits, comprising the second filling index LBF2 (for example equal to 0 if the local buffer LB2 is empty, otherwise equal to 1) and the second modulation index CM2;
- a number of data fields D1, D2, D3 each comprising one or more bytes of the data received from the serial channel transmission module CWMtx2. The number of data fields D1, D2, D3 is preferably equal to 3. Moreover, each of the data fields D1, D2, D3 has preferably a length of 1 byte.

The serial interface data units SFr' are then sent to the serializer S2 which, preferably, serializes the bits of each data unit SFr' and transmits them serially along the cable C (in particular along the twisted pair TP2) towards the deserializer D1 contained in the first transceiver TRX1. Moreover, the serializer S2 periodically inserts alignment words in the sequence of data units SFr; in a similar manner to that described above. The serial interface data units SFr' and the alignment words form a data flow SDF' which is transmitted serially along the twisted pair TP2 at the same speed as the data flow SDF described above (about 1 Gb/s).

In the master unit ODU1 the deserializer D2 preferably receives the data flow SDF' from the serializer S2 of the slave unit ODU2, deserializes it and reconstructs the serial interface data units SFr' using the alignment words inserted in the data flow SDF'.

The serial interface data units SFr' are transmitted to the traffic balancing block LBM1 of the transceiver TRX1 and in particular to the serial channel reception module CWMrx1. This module preferably extracts from the serial interface data units SFR' received the radio interface frames RFr2' and sends them to the reception buffer RXB.

Moreover, this module CWMrx1 preferably extracts from the control field FCt' of the serial interface data units SFr' the second filling index LBF2 and the second modulation index CM2 and transfers them to the transmission request management module TRM. In this way, advantageously, the transmission request module TRM is at all times kept informed of the modulation format currently used by the modulator MOD2 of the second transceiver TRX2 and the filling state of the local buffer LB2.

The reception buffer RXB preferably reads the frame headers FHd1', FHd2' of the radio interface frames RFr1' and RFr2' received respectively via the first and the second radio channel CH1, CH2. In particular, the reception buffer RXB preferably reads the sequence number sub-field SNf' of each frame and reorders the radio interference frames RFr1' and RFr2' received depending on their sequence number SN'.

In the reception buffer RXB all the radio interface frames RFr1' and RFr2' stored therein are then analysed in sequence.

In particular, in the reception buffer RXB the distribution ratio sub-field SR' of each frame header FHd1', FHd2" of the frames RFr1', RFr2' is read.

If the content of the distribution ratio sub-field SR' indicates that all the bytes of the packet EF' have been transmitted via a single radio channel CH1 or CH2 (in this case in the sub-field SR' the number m or n is a predetermined number, for example 7, as described above, depending on whether all the bytes of the packet EF' have been transmitted on the first radio channel CH1 or on the second radio channel CH2, respectively) all the payload bytes FPy' of the associated frame, for example the radio interface frame RFr1', are sent to the receiving frame processing module FPrx1 which manages their retransmission in the form of, for example, an Ethernet frame towards the data interface DI. If the sub-field SNf' comprises an incorrect sequence number SN', or a sequence number SN' which is not equal to the sequence number of the previously analysed frame, incremented by 1, then the reception buffer RXB counts a sequence error.

If the content of the sub-field SR' indicates that the bytes of the packet EF' have been transmitted on both the radio channels CH1, CH2 (namely, in the sub-field SR' the number m or n is different from the predetermined number mentioned above), the reception buffer RXB checks whether both the radio interface frames RFr1' and RFr2' with the same sequence number SN' are stored in the said buffer. If this is not the case, the reception buffer RXB waits for both the frames RFr1' and RFr2' with the same sequence number SN' to be received and stored therein. If the wait time lasts more than a predetermined period of time, the frame currently analysed is preferably discarded.

Then the reception buffer RXB preferably extracts alternately from the radio interface frames RFr1' and RFr2', starting from the frame in which the start sub-field Sb' is equal to 0, blocks of m bytes and n bytes, respectively, and sends these blocks to the receiving frame processing module FPrx1 in order to reconstruct the packet EF'. The operation of reconstruction of the packet EF' is therefore substantially the reverse operation of the operation performed by the transmission request management module TRM and corresponding to steps 517, 519, 521 and 518, 520, 522 in the flow diagram of Figure 5. The receiving frame processing module FPrx1 then manages retransmission of the packet EF' thus reconstructed as an Ethernet frame on the data interface DI.

Moreover, the reception buffer RXB carries out checks on the sequence of the frames received. In particular the reception buffer RXB preferably discards the radio interface frames RFr1' and RFr2' with a sequence number SN' which is incorrect (or different from the sequence number of the previously analysed radio interface frames RFr1', RFr2', respectively, incremented by 1).

In the reception buffer RXB, advantageously, the bytes of the same packet EF' transmitted on the two different radio channels may be easily recombined once they have reached their destination. In fact, the radio interface frames transmitted on the two different radio channels are identified by the same sequence number, namely the sequence number associated with the original packet. Moreover, the radio interface frames contain all the useful information (total number Mb, Nb of bytes of the packet transmitted in each frame, number of bytes m, n of each block Bi, Bj) for extracting from them, in the correct alternating sequence, the bytes of the packet transmitted.

## Claims

1. A method for distributing data units (EF) of a data flow between a first outdoor unit (ODU1) and a second outdoor unit (ODU2) of a radio transceiving system (RT) of a radio communication network, wherein said first outdoor unit (ODU1) is configured to support a first radio channel (CH1) towards a further radio transceiving system of said network and said second outdoor unit (ODU2) is configured to support a second radio channel (CH2) towards said further radio transceiving system, said method comprising the following steps, at said first outdoor unit (ODU1):
a) receiving a data unit (EF) of said data flow;
b) when said first radio channel (CH1) and said second radio channel (CH2) are available, dividing said data unit (EF) into a number of first data blocks (Bi) of a first length, m, alternated with a number of second data blocks (Bj) of a second length, n, wherein said first length is correlated to a first transmission capacity of said first radio channel (CH1) and wherein said second length is correlated to a second transmission capacity of said second radio channel (CH2); and
c) managing said first data blocks (Bi) in said first outdoor unit (ODU1) and forwarding said second data blocks (Bj) to said second outdoor unit (ODU2).

2. The method according to claim 1, wherein said step a) further comprises assigning to said received data unit (EF) a sequence number (SN) indicative of an order of the data unit (EF) within said data flow.

3. The method according to claim 2, wherein said step b) further comprises associating said sequence number (SN) with said first data blocks (Bi) and with said second data blocks (Bj).

4. The method according to any one of the preceding claims, wherein, in said step c), said forwarding comprises sending said second data blocks (Bj) to said second outdoor unit (ODU2) via a serial communication channel (CSC) between said first outdoor unit (ODU1) and said second outdoor unit (ODU2).

5. The method according to any one of the preceding claims, wherein said step b) further comprises reading said first length and said second length from a traffic balancing table (TBT) as a function of a first index (CM1) indicative of said first transmission capacity and of a second index (CM2) indicative of said second transmission capacity.

6. The method according to claim 5, further comprising continuously receiving from said second outdoor unit (ODU2) said second index (CM2) indicative of said second transmission capacity via said serial communication channel (CSC).

7. A transmission request managing device (TRM) for an outdoor unit (ODU1) of a radio transceiving system (RT) of a radio communication network, said outdoor unit (ODU1) being configured to support a first radio channel (CH1) towards a further radio transceiving system of said network, said radio transceiving system (RT) comprising a further outdoor unit (ODU2) configured to support a second radio channel (CH2) towards said further radio transceiving system, said device (TRM) being configured to divide, when said first radio channel (CH1) and said second radio channel (CH2) are available, a data unit (EF) of a data flow received at said outdoor unit (ODU1) into a number of first data blocks (Bi) of a first length, m, alternated with a number of second data blocks (Bj) of a second length, n, wherein said first length is correlated to a first transmission capacity of said first radio channel (CH1) and wherein said second length is correlated to a second transmission capacity of said second radio channel (CH2).

8. An outdoor unit (ODU1) for a radio transceiving system (RT) of a radio communication network, said outdoor unit (ODU1) being configured to support a first radio channel (CH1) towards a further transceiving system of said network, said radio transceiving system (RT) comprising a further outdoor unit (ODU2) configured to support a second radio channel (CH2) towards said further radio transceiving system, said outdoor unit (ODU1) being configured to:
- receive a data flow divided into data units (EF);
- when said first radio channel (CH1) and said second radio channel (CH2) are available, divide a data unit (EF) of said data flow into a number of first data blocks (Bi) of a first length, m, alternated with a number of second data blocks (Bj) of a second length, n, wherein said first length is correlated to a first transmission capacity of said first radio channel (CH1) and wherein said second length is correlated to a second transmission capacity of said second radio channel (CH2); and
- manage said first data blocks (Bi) and forward said second data blocks (Bj) to said further outdoor unit (ODU2).

9. A radio transceiving system (RT) for a radio communication network, said radio transceiving system (RT) comprising a first outdoor unit (ODU1) according to claim 8, and a second outdoor unit (ODU2).
